# EUROPEAN PATENT APPLICATION

(11) **EP 4 637 024 A1**
(43) Date of publication of application: **22.10.2025**
(21) Application number: 23925445.1
(22) Date of filing: 27.12.2023
(51) Int. Cl.: H02P 29/66, H02P 23/16

(54) **MOTOR DRIVE DEVICE AND COMPRESSOR**

(30) Priority: 28.02.2023 JP 2023030285
(71) Applicant: Daikin Industries, Ltd., Osaka-shi, Osaka 530-0001 (JP)
(72) Inventor: KITO Minoru, Osaka-shi, Osaka 530-0001 (JP); KONO Takashi, Osaka-shi, Osaka 530-0001 (JP); SEKIMOTO Morimitsu, Osaka-shi, Osaka 530-0001 (JP)
(74) Representative: Goddar, Heinz J.
(86) International application number: PCT/JP2023/047114
(87) International publication number: WO 2024/180895

(57) **Abstract**

A motor drive device includes a control unit (68) configured to calculate an estimated temperature (TA) of a magnet. The control unit (68) reduces the current flowing through a motor (32) if an operating condition of the motor (32) satisfies a predetermined operating condition, and the current flowing through the motor (32) exceeds a corresponding threshold (UA). reduces the current flowing through the motor (32) if the operating condition of the motor (32) does not satisfy the predetermined operating condition, and the current flowing through the motor (32) exceeds a fixed threshold (UB).

## Description

### TECHNICAL FIELD

The present disclosure relates to a motor drive device and a compressor.

### BACKGROUND ART

A motor drive device described in Patent Document 1 determines the resistance of a motor winding based on a voltage applied to the motor and a current flowing through the motor, estimates the temperature of magnets of a rotor based on the resistance of the winding and the temperature coefficient of the winding, sets an overcurrent protection set value to be below a demagnetizing current at the estimated temperature of the permanent magnets, based on the relationship between the demagnetizing current and the magnet temperature, and changes the overcurrent protection set value in accordance with a change in the estimated temperature of the permanent magnets.

### CITATION LIST

### PATENT DOCUMENT

Patent Document 1: Japanese Unexamined Patent Publication No. 2013-255373

### SUMMARY OF THE INVENTION

### TECHNICAL PROBLEM

However, if the accuracy of the estimated temperature of the magnets decreases depending on the operating conditions of the motor, a large error may occur in the overcurrent protection set value (threshold). In this case, the overcurrent protection set value may differ significantly from its actual value, and the motor may be demagnetized even if current is passed through the motor to fall below the overcurrent protection set value.

It is an object of the present disclosure to effectively reduce the likelihood of motor demagnetization.

### SOLUTION TO THE PROBLEM

A first aspect of the present disclosure is directed to a motor drive device. The motor drive device is configured to drive a motor (32) including a magnet that generates a magnetic field. The motor drive device includes: a sensor (64) configured to detect a current flowing through the motor (32); and a control unit (68) configured to calculate an estimated temperature (TA) of the magnet. The control unit (68) reduces the current flowing through the motor (32) if an operating condition of the motor (32) satisfies a predetermined operating condition, and the current flowing through the motor (32) exceeds a corresponding threshold (UA), the corresponding threshold (UA) being a threshold corresponding to the estimated temperature (TA) of the magnet in threshold information (U) in which a plurality of temperatures of the magnet and a plurality of thresholds are associated with each other, and reduces the current flowing through the motor (32) if the operating condition of the motor (32) does not satisfy the predetermined operating condition, and the current flowing through the motor (32) exceeds a fixed threshold (UB), the fixed threshold (UB) being a threshold corresponding to a preset temperature (TB) of the magnet in the threshold information (U).

According to the first aspect, it is possible to reduce demagnetization of the motor (32) effectively.

A second aspect of the present disclosure is an embodiment of the first aspect. In the second aspect, the magnet includes a rare earth magnet, and the preset temperature (TB) is a value equal to or higher than a maximum temperature of temperature limit values of the motor (32) or a maximum temperature in an operating temperature range of the motor (32).

According to the second aspect, it is possible to reduce the likelihood of the current of the motor (32) exceeding the minimum value of the demagnetizing current even under an unstable operating condition that makes an error in the estimated temperature (TA) of the magnet greater (i.e., even in a case where the predetermined operating condition is not satisfied).

A third aspect of the present disclosure is an embodiment of the first aspect. In the third aspect, the magnet includes a ferrite magnet, and the preset temperature (TB) is a value equal to or lower than a minimum temperature of temperature limit values of the motor (32) or a minimum temperature in an operating temperature range of the motor (32).

According to the third aspect, it is possible to reduce the likelihood of the current of the motor (32) exceeding the minimum value of the demagnetizing current even under an unstable operating condition that makes an error in the estimated temperature (TA) of the magnet greater (i.e., even in a case where the predetermined operating condition is not satisfied).

A fourth aspect of the present disclosure is an embodiment of any one of the first to third aspects. In the fourth aspect, the predetermined operating condition includes a condition under which the number of revolutions of the motor (32) is equal to or greater than a predetermined number of revolutions.

According to the fourth aspect, as the upper limit of the current of the motor (32) set to prevent demagnetization, the corresponding threshold (UA) is used when the number of revolutions of the motor (32) is equal to or greater than the predetermined number of revolutions, and the fixed threshold (UB) is used when the number of revolutions of the motor (32) is less than the predetermined number of revolutions.

A fifth aspect of the present disclosure is an embodiment of any one of the first to third aspects. In the fifth aspect, the predetermined operating condition includes a condition under which the current flowing through the motor (32) is equal to or greater than a predetermined value.

According to the fifth aspect, as the upper limit of the current of the motor (32) set to prevent demagnetization, the corresponding threshold (UA) is used when the current flowing through the motor (32) is equal to or greater than the predetermined value, and the fixed threshold (UB) is used when the current flowing through the motor (32) is less than the predetermined value.

A sixth aspect of the present disclosure is an embodiment of any one of the first to third aspects. In the sixth aspect, the predetermined operating condition includes a condition under which the number of revolutions of the motor (32) is equal to or greater than a predetermined number of revolutions, and the current flowing through the motor (32) is equal to or greater than a predetermined value.

According to the sixth aspect, as the upper limit of the current of the motor (32) set to prevent demagnetization, the corresponding threshold (UA) is used when the number of revolutions of the motor (32) is equal to or greater than the predetermined number of revolutions, and the current flowing through the motor (32) is equal to or greater than the predetermined value; and the fixed threshold (UB) is used when the number of revolutions of the motor (32) is less than the predetermined number of revolutions, and the current flowing through the motor (32) is less than the predetermined value.

A seventh aspect of the present disclosure is an embodiment of the fifth or sixth aspect. In the seventh aspect, the predetermined value is a minimum value within a range of possible values of a demagnetizing current at temperature limit values of the motor, and the demagnetizing current is a current value of the motor that reduces a magnetic force of the magnet.

According to the seventh aspect of the present disclosure, the predetermined value can be the minimum value within the range of possible values of the demagnetizing current at the temperature limit values of the motor.

An eighth aspect of the present disclosure is an embodiment of the fifth or sixth aspect. In the eighth aspect, the current to be compared to the predetermined value is a current value filtered for antihunting.

According to the eighth aspect, it is possible to achieve stable operation of the motor drive device while reducing hunting.

A ninth aspect of the present disclosure is an embodiment of the eighth aspect. In the ninth aspect, the filtering is performed using a low-pass filter with a cut-off frequency set to allow current variations within an expected range to pass and remove current variations outside the expected range.

According to the ninth aspect, it is possible to reduce a time delay in the current detected by the sensor (64). Thus, a protection operation for the motor drive device (to control the current flowing through the motor (32) so as not to exceed the corresponding threshold (UA) or the fixed threshold (UB)) can be performed effectively.

A tenth aspect of the present disclosure is an embodiment of any one of the first to ninth aspects. In the tenth aspect, the motor (32) drives a compressor (30), and the control unit (68) calculates the estimated temperature (TA) of the magnet based on a temperature of a discharge pipe (22) of the compressor (30) or a temperature of an outer contour of the compressor (30).

According to the tenth aspect, the estimated temperature (TA) of the magnet can be calculated based on the temperature of the discharge pipe (22) of the compressor (30) or the temperature of the outer contour of the compressor (30).

An eleventh aspect of the present disclosure is an embodiment of any one of the first to tenth aspects. In the eleventh aspect, the control unit (68) stops energization of the motor (32) to reduce the current flowing through the motor (32).

According to the eleventh aspect, demagnetization can be reduced by stopping the motor (32).

A twelfth aspect of the present disclosure is an embodiment of any one of the first to eleventh aspects. In the twelfth aspect, the control unit (68) removes a noise signal from information indicating the current of the motor (32) to be compared to the corresponding threshold (UA) or the fixed threshold (UB).

According to the twelfth aspect, it is possible to accurately perform a comparison between the corresponding threshold (UA) or the fixed threshold (UB) and the current of the motor (32).

A thirteenth aspect of the present disclosure is an embodiment of the twelfth aspect. In the thirteenth aspect, the noise signal is removed by limiting an amount of variation in a detection signal between samplings.

According to the thirteenth aspect, it is possible to remove noise while reducing the detection delay of the current of the motor (32).

A fourteenth aspect of the present disclosure is an embodiment of any one of the first to thirteenth aspects. In the fourteenth aspect, the control unit (68) reduces a current that passes through the motor (32), while maintaining the motor (32) in an energized state, to reduce the current flowing through the motor (32).

According to the fourteenth aspect, the current that passes through the motor (32) is reduced while maintaining the motor (32) in the energized state, which makes it possible to reduce the demagnetization while maintaining rotation of the motor (32).

A fifteenth aspect of the present disclosure is an embodiment of the fourteenth aspect. In the fifteenth aspect, a filter is used to delay changes in a calculation result of the estimated temperature (TA) of the magnet, as compared to a response in which the number of revolutions of the motor (32) is reduced by reducing the current.

According to the fifteenth aspect, it is possible to effectively reduce the likelihood that the current of the motor (32) exceeds the minimum value of the demagnetizing current.

A sixteenth aspect of the present disclosure is an embodiment of any one of the first to fifteenth aspects. In the sixteenth aspect, the threshold information (U) includes first threshold information (U1) and second threshold information (U2), the second threshold information (U2) being used to set a threshold lower than that set based on the first threshold information (U1), the threshold includes the corresponding threshold (UA1, UA2) and the fixed threshold (UB1, UB2), the control unit (68) stops energization of the motor (32) if the current flowing through the motor (32) exceeds the threshold (UA1, UB1) set based on the first threshold information (U1), and reduces a current that passes through the motor (32), while maintaining the motor (32) in an energized state, if the current flowing through the motor (32) exceeds the threshold (UA2, UB2) set based on the second threshold information (U2).

According to the sixteenth aspect, by using a configuration that reduces the current, while maintaining the passage of the current through the motor (32), to lower the rotational speed of the motor (32) and a configuration that stops the current flowing through the motor (32) to stop the motor (32), it is possible to reduce, in a stepwise manner, the likelihood that the current of the motor (32) exceeds the demagnetizing current.

A seventeenth aspect of the present disclosure is directed to a compressor. The compressor includes: the motor drive device of any one of the first to sixteenth aspects; and the motor (32).

### BRIEF DESCRIPTION OF THE DRAWINGS

[FIG. 1] FIG. 1 is a schematic configuration diagram of a refrigeration apparatus according to an embodiment.
[FIG. 2] FIG. 2 is a longitudinal sectional view of a compressor according to the embodiment.
[FIG. 3] FIG. 3 is a transverse sectional view illustrating the inside of a compression mechanism according to the embodiment.
[FIG. 4] FIG. 4 is a diagram illustrating a configuration of a motor drive device.
[FIG. 5] FIG. 5 is a diagram showing operating conditions of a motor.
[FIG. 6] FIG. 6 is a table showing the relationship between the operating conditions of the motor and thresholds.
[FIG. 7] FIG. 7 is a diagram showing a corresponding threshold and a fixed threshold.
[FIG. 8] FIG. 8 is a flowchart of a first example operation of a control unit.
[FIG. 9] FIG. 9 is a diagram showing a first corresponding threshold, a second corresponding threshold, a first fixed threshold, and a second fixed threshold.
[FIG. 10] FIG. 10 is a flowchart of a second example operation of the control unit.
[FIG. 11] FIG. 11 is a flowchart of the second example operation of the control unit.

### DESCRIPTION OF EMBODIMENTS

### <First Embodiment>

Embodiments of the present invention will be described in detail with reference to the drawings. In the following embodiments, like reference characters denote the same or equivalent components in the drawings, and the detailed description thereof, the description of advantages associated therewith, and other descriptions will not be repeated.

### <General Configuration of Refrigeration Apparatus>

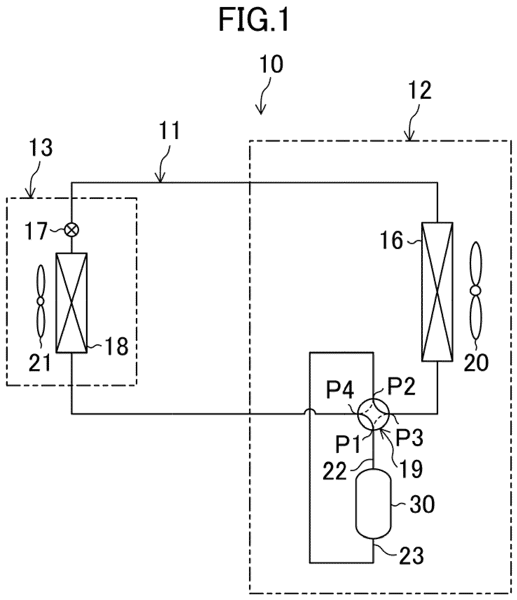

A refrigeration apparatus according to an embodiment is an air conditioner (10) that cools and heats indoor air. As illustrated in FIG. 1, the air conditioner (10) has a refrigerant circuit (11) filled with a refrigerant. The refrigerant circulates in the refrigerant circuit (11) to perform a vapor compression refrigeration cycle.

The air conditioner (10) includes an outdoor unit (12) and an indoor unit (13). The number of the indoor unit(s) (13) is not limited to one and may be two or more.

A compressor (30), an outdoor heat exchanger (16) (a heat source heat exchanger), an expansion valve (17), an indoor heat exchanger (18) (a utilization heat exchanger), and a four-way switching valve (19) are connected to the refrigerant circuit (11). The compressor (30), the outdoor heat exchanger (16), and the four-way switching valve (19) are housed in the outdoor unit (12). The indoor heat exchanger (18) and the expansion valve (17) are housed in the indoor unit (13).

In the outdoor unit (12), an outdoor fan (20) is installed near the outdoor heat exchanger (16). The outdoor heat exchanger (16) exchanges heat between outdoor air transported by the outdoor fan (20) and the refrigerant. In the indoor unit (13), an indoor fan (21) is installed near the indoor heat exchanger (18). The indoor heat exchanger (18) exchanges heat between indoor air transported by the indoor fan (21) and the refrigerant.

The four-way switching valve (19) has first to fourth ports (P1 to P4). The first port (P1) is connected to a discharge pipe (22) of the compressor (30); the second port (P2) is connected to a suction pipe (23) of the compressor (30); the third port (P3) is connected to the gas end of the outdoor heat exchanger (16); and the fourth port (P4) is connected to the gas end of the indoor heat exchanger (18). The four-way switching valve (19) switches between a first state (the state indicated by the solid curves in FIG. 1) and a second state (the state indicated by the broken curves in FIG. 1). In the first state, the first port (P1) and the fourth port (P4) communicate with each other, and the second port (P2) and the third port (P3) communicate with each other. Thus, if the compressor (30) is operated with the four-way switching valve (19) in the first state, a refrigeration cycle (a heating cycle) is performed in which the indoor heat exchanger (18) functions as a condenser (a radiator) and the outdoor heat exchanger (16) functions as an evaporator. In the second state, the first port (P1) and the third port (P3) communicate with each other, and the second port (P2) and the fourth port (P4) communicate with each other. Thus, if the compressor (30) is operated with the four-way switching valve (19) in the second state, a refrigeration cycle (a cooling cycle) is performed where the outdoor heat exchanger (16) functions as a condenser (a radiator) and the indoor heat exchanger (18) functions as an evaporator.

### <General Configuration of Compressor>

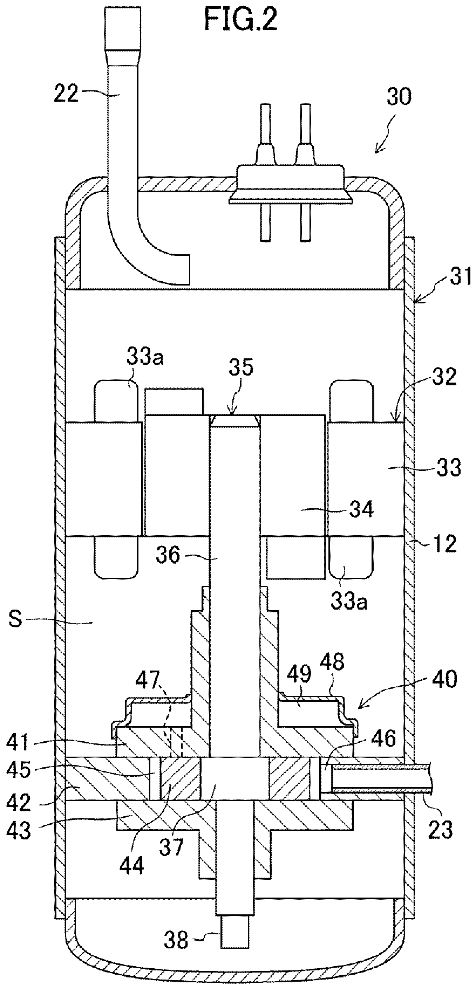

As illustrated in FIG. 2, the compressor (30) includes a sealed cylindrical housing (31) that is vertically oriented. The suction pipe (23) passes through, and is fixed to, a lower portion of the housing (31). The discharge pipe (22) passes through, and is fixed to, the top (an upper end plate) of the housing (31). Oil (refrigerating machine oil) for lubricating sliding components of the compressor (30) is stored at the bottom of the housing (31). An internal space (S) to be filled with the refrigerant discharged from the compression mechanism (40) (the discharged refrigerant or the high-pressure refrigerant) is formed inside the housing (31). That is to say, the compressor (30) of this embodiment is configured as a so-called high-pressure dome compressor. The internal space (S) of the housing (31) of this compressor has an internal pressure substantially equal to the pressure of the high-pressure refrigerant.

The motor (32), the drive shaft (35), and the compression mechanism (40) are provided in the internal space (S) of the housing (31) in this order from top to bottom.

The motor (32) includes a stator (33) and a rotor (34). The stator (33) is fixed to the inner peripheral surface of the barrel of the housing (31). The rotor (34) passes through the inside of the stator (33) in the top-to-bottom direction. The rotor (34) is provided with magnets (permanent magnets). In the first embodiment, the magnets include a rare earth magnet. The stator (33) has teeth (not shown), around each of which a coil (33a) is wound. The drive shaft (35) is fixed within the axial center of the rotor (34). When the motor (32) is energized, the drive shaft (35) is rotationally driven together with the rotor (34).

The drive shaft (35) is located on the axis of the barrel of the housing (31). The drive shaft (35) is rotatably supported by bearings of the compression mechanism (40). The drive shaft (35) includes a main shaft (36) coaxial with the motor (32), and a crankshaft (37) eccentric to the main shaft (36). The outside diameter of the crankshaft (37) is larger than the outside diameter of the main shaft (36). An oil pump (38) is provided at a lower portion of the drive shaft (35) to draw the refrigerating machine oil stored at the bottom of the housing (31). The refrigerating machine oil drawn by the oil pump (38) is supplied through a shaft flow path inside the drive shaft (35) to the bearings and the sliding components of the compression mechanism (40).

The compression mechanism (40) is disposed below the motor (32). The compression mechanism (40) includes a front head (41), a cylinder (42), a rear head (43), and a piston (44). The cylinder (42) is formed in a flat cylindrical shape. An opening in the upper end of the cylinder (42) is closed by the front head (41), and an opening in the lower end of the cylinder (42) is closed by the rear head (43). Thus, a columnar cylinder chamber (45) is defined in the cylinder (42).

The cylinder chamber (45) houses the annular piston (44). The piston (44) is fitted into the crankshaft (37). Thus, the drive shaft (35) rotationally driven by the motor (32) causes the piston (44) to rotate eccentrically in the cylinder chamber (45).

A suction port (46) passes through the cylinder (42) in a radial direction to communicate with the cylinder chamber (45) (strictly speaking, a low-pressure chamber (L)). The suction pipe (23) is connected to the suction port (46). The front head (41) has a discharge port (47) communicating with the cylinder chamber (strictly speaking, a high-pressure chamber (H)). The discharge port (47) is provided with a discharge valve (not shown) such as a reed valve.

A muffler (48) is attached to an upper portion of the compression mechanism (40) to cover the front head (41). A muffler space (49) is formed inside the muffler (48) to communicate with the discharge port (47). In the muffler space (49), noise caused by the discharge pulsation of the refrigerant is reduced.

### <Internal Structure of Compression Mechanism>

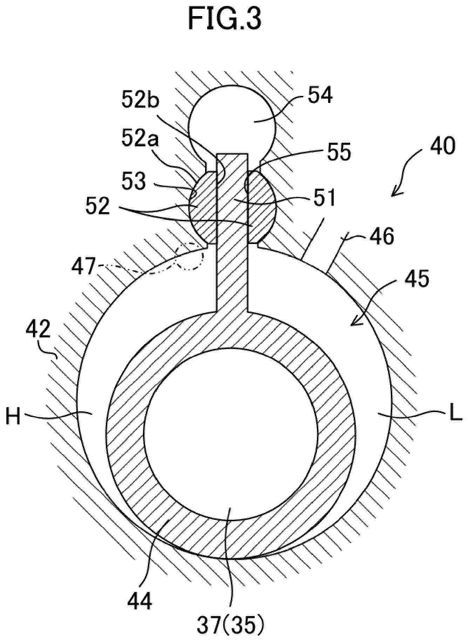

The compression mechanism (40) is configured as an oscillating piston compression mechanism including a blade (51) and bushes (52). As illustrated in FIG. 2 and FIG. 3, the cylinder (42) has a bush groove (53) and a back pressure chamber (54). The bush groove (53) is adjacent to the cylinder chamber (45) and communicates with the cylinder chamber (45). The bush groove (53) forms a columnar space having a substantially circular transverse section. The back pressure chamber (54) is located radially outward of the bush groove (53) in the cylinder (42). The back pressure chamber (54) forms a columnar space having a substantially circular transverse section.

The end of the back pressure chamber (54) near the cylinder chamber (45) communicates with the bush groove (53). The back pressure chamber (54) has a high-pressure atmosphere that is equivalent to the pressure of the internal space (S) of the housing (31) (i.e., the pressure of the refrigerant discharged from the compression mechanism (40)). The oil drawn by the oil pump (38) is supplied to the back pressure chamber (54). The oil in the back pressure chamber (54) is used to lubricate sliding portions between the inner peripheral surface of the bush groove (53) and the bushes (52) and sliding portions between the bushes (52) and the blade (51).

The pair of bushes (52) each have a substantially bow-shaped or semicircular transverse section. The pair of bushes (52) are held inside the bush groove (53) so as to be capable of oscillating. The pair of bushes (52) each have an arc portion (52a) that faces the bush groove (53), and a flat portion (52b) that faces the blade (51). The pair of bushes (52) perform an oscillatory movement, with the center of the bush groove (53) serving as an axis, so that the arc portions (52a) are in sliding contact with the bush groove (53).

The pair of bushes (52) are disposed in the bush groove (53) such that the flat portions (52b) face each other. Thus, a blade groove (55) is formed between the flat portions (52b) of the pair of bushes (52). The blade groove (55) has a substantially rectangular transverse section, and the blade (51) is held inside the blade groove (55) so as to be movable forward and backward in the radial direction.

The blade (51) is formed in the shape of a rectangular parallelepiped or in the shape of a plate extending radially outward. The root end (radially inner end) of the blade (51) is integrated with the outer peripheral surface of the piston (44). The piston (44) and the blade (51) may be formed integrally as the same member or may be formed of different members fixed integrally to each other. The distal end (radially outer end) of the blade (51) is located in the back pressure chamber (54). The blade (51) partitions the cylinder chamber (45) into the low-pressure chamber (L) and the high-pressure chamber (H). The low-pressure chamber (L) is a space on the right side of the blade (51) in FIG. 3 and communicates with the suction port (46). The high-pressure chamber (H) is a space on the left side of the blade (51) in FIG. 3 and communicates with the discharge port (47).

### <Motor Drive Device>

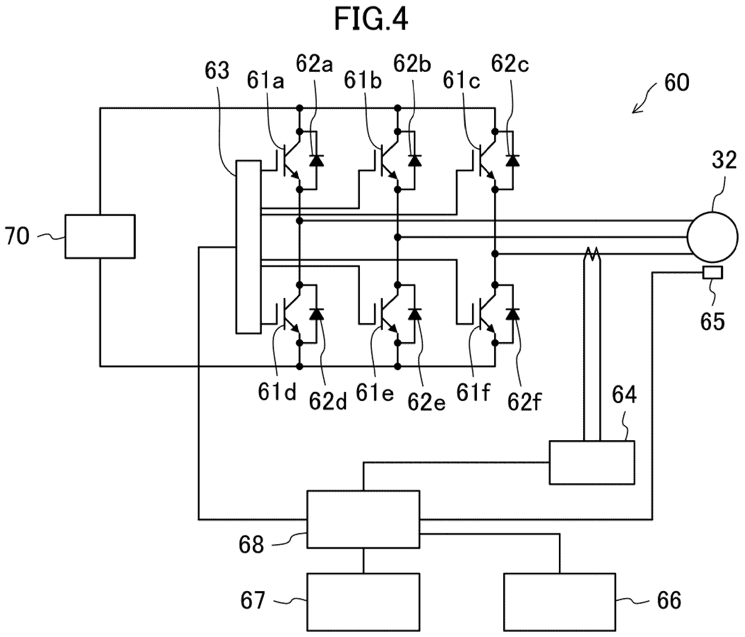

As illustrated in FIG. 4, the compressor (30) includes a motor drive device (60). A power source (70) and the motor (32) are connected to the motor drive device (60). The power source (70) may be a DC power source, such as a cell and a battery, or may be an AC/DC power converter, including a known converter that converts an AC voltage into a DC voltage. The motor drive device (60) converts a DC voltage supplied from the power source (70) into an AC voltage and supplies the AC voltage to the motor (32). The motor drive device (60) includes an inverter circuit, a first sensor (64), a second sensor (65), a third sensor (66), a storage (67), and a control unit (68).

The inverter circuit receives a DC voltage from the power source (70), performs pulse width modulation (PWM) control in response to operation of the control unit (68), and converts the received DC voltage into a three-phase alternating current at any voltage and frequency. The inverter circuit includes a plurality of switching elements (61a) to (61f), a plurality of diode elements (62a) to (62f), and a drive circuit (63). Examples of the switching elements (61a) to (61f) include insulated gate bipolar transistors (IGBTs). The diode elements (62a) to (62f) allow a reflux current to flow therethrough when the switching elements (61a) to (61f) are turned off. The inverter circuit is incorporated in one package to form a power module. The drive circuit (63) may be included in the control unit (68), not in the power module.

The drive circuit (63) generates an actuating signal (such as a PWM signal and a gate signal) based on a control signal sent from the control unit (68), and outputs the generated actuating signal to the switching elements (61a) to (61f), thereby causing the switching elements (61a) to (61f) to perform a switching operation. A voltage is applied to the coils (33a) of the motor (32) by the switching operations of the switching elements (61a) to (61f). By controlling winding current through the coils (33a) of the motor (32) as described above, a rotating magnetic field synchronized with the rotor (34) is generated, thereby controlling the driving of the motor (32).

The first sensor (64) detects a current flowing through the motor (32). The first sensor (64) includes a current detection circuit, for example. The current detection circuit converts, for example, a current (an alternating current) flowing through any one of the three phases of the motor (32) into a voltage (alternating current) using a DC current transformer (DCCT), and amplifies this voltage using an operational amplifier and converts the output voltage into a range of the voltage value (e.g., 0V to 5 V) to be input to the control unit (68) configured as a microcomputer. The voltage value is input to an A/D input port of the control unit (68), and the control unit (68) reads the voltage value as a digital value. For example, the control unit (68) multiplies the received voltage value by a predetermined constant to convert the received voltage value into a current value flowing through the motor (32). Since the current detected in this manner is an alternating current, the current value varies with time; however, the period of the current value is constant in the short term. Thus, the current (effective value) can be determined by calculating its effective value.

The first sensor (64) merely needs to be configured to detect the current flowing through the motor (32). The configuration of the first sensor (64) is not limited to the above configuration. For example, the first sensor (64) may convert the current flowing through the motor (32) into a voltage value using a sense resistor and may isolate the resultant voltage value using an isolation amplifier and transmit it to the control unit (68).

The second sensor (65) detects the number of revolutions (rotational speed) of the motor (32) (the rotor (34)). Examples of the second sensor (65) include a Hall sensor. The Hall sensor detects the S-pole or the N-pole from the magnetic flux of the magnets of the rotor (34) and inputs the detected pole to the control unit (68). The control unit (68) detects the number of revolutions of the motor (32) from a detection signal of the Hall sensor. The control unit (68) may estimate (calculate) the number of revolutions of the motor (32) based on a detection value of a current sensor that detects the current flowing through the motor (32) or a detection value of a voltage sensor that detects the voltage applied to the motor (32). The number of revolutions of the motor (32) may be the number of revolutions at which the control unit (68) instructs the motor (32) to rotate.

The third sensor (66) is a temperature sensor (e.g., a thermistor) provided in the discharge pipe (22) to detect the temperature of the discharge pipe (22).

The storage (67) includes a main memory (e.g., a semiconductor memory), such as a flash memory, a read only memory (ROM), or a random access memory (RAM), and may further include an auxiliary memory (e.g., a hard disk drive, a solid state drive (SSD), a secure digital (SD) memory card, or a universal serial bus (USB) flash memory). The storage (67) stores various computer programs executable by the control unit (68).

The control unit (68) includes a processor, such as a central processing unit (CPU) or a microprocessor unit (MPU). The control unit (68) executes a computer program stored in the storage (67) so as to control elements of the motor drive device (60).

### <Operation of Compressor>

When the motor (32) is energized and the drive shaft (35) is rotationally driven, the piston (44) performs an eccentric movement (strictly speaking, an oscillatory movement) in the cylinder chamber (45).

As illustrated in FIG. 3, in the compression mechanism (40), the outer peripheral surface of the piston (44) is in line contact with the inner peripheral surface of the cylinder chamber (45) via an oil film, thereby forming a sealing portion. When the piston (44) performs an oscillatory movement, the sealing portion between the piston (44) and the cylinder (42) is displaced along the inner peripheral surface of the cylinder chamber (45), resulting in a change in the capacity of each of the low-pressure chamber (L) and the high-pressure chamber (H). At this time, the blade (51) moves forward and backward in the blade groove (55) in accordance with the angle of rotation of the piston (44). At the same time, the pair of bushes (52) oscillate together with the blade (51), with the axis of the bush groove (53) serving as the center. The "angle of rotation" as used herein represents an angle in the direction of rotation of the drive shaft (35) (the clockwise direction in FIG. 3) with respect to a reference 0°, which is a point at which the piston (44) is closest to the bush groove (53) (a so-called "top dead center").

As the capacity of the low-pressure chamber (L) increases gradually with the oscillatory movement of the piston (44), the low-pressure refrigerant is sucked through the suction pipe (23) and the suction port (46) into the low-pressure chamber (L). Next, this low-pressure chamber (L) is isolated from the suction port (46), and the isolated space forms the high-pressure chamber (H). Next, as the capacity of the high-pressure chamber (H) decreases gradually, the internal pressure of the high-pressure chamber (H) increases. When the internal pressure of the high-pressure chamber (H) becomes higher than the pressure of the internal space (S), a discharge phase is performed. That is to say, in the discharge phase, the discharge valve of the discharge port (47) is opened, and the refrigerant in the high-pressure chamber (H) is discharged from the discharge port (47). The refrigerant discharged from the discharge port (47) of the compression mechanism (40) in the internal space (S) flows through the muffler space (49) into the internal space (S). In the internal space (S), a flow path where the refrigerant flows is formed between the compression mechanism (40) and the discharge pipe (22). The motor (32) is on this flow path. The refrigerant that has flowed out of the compression mechanism (40) into the internal space (S) flows through the flow path and reaches the motor (32), flows around the motor (32) and reaches the discharge pipe (22), and flows out of the housing (31) through the discharge pipe (22). The fluid that has flowed out of the housing (31) through the discharge pipe (22) is sent to the refrigerant circuit (11).

### <Configuration for Reducing Demagnetization>

Demagnetization means an irreversible decrease in the magnetic force of the magnets of the motor (32). An excessively large current flowing through the motor (32) may cause demagnetization. A configuration for reducing demagnetization will be described below.

### <First Example of Threshold Information>

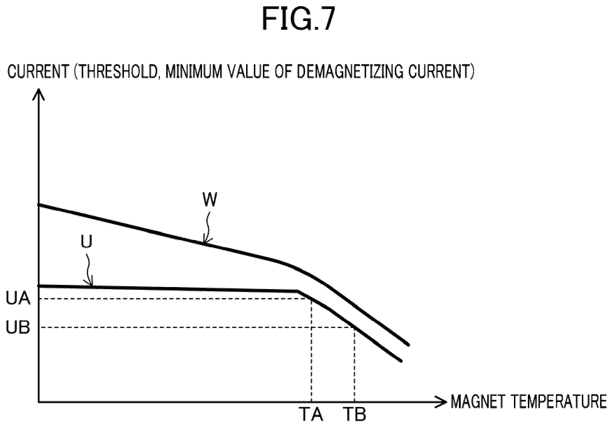

The storage (67) stores threshold information (U) (see FIG. 7). The threshold information (U) is information in which a plurality of temperatures of the magnets are associated with respective thresholds. The thresholds indicate the upper limit of the current flowing through the motor (32). In the coordinate system in FIG. 7 indicating the threshold information (U), the vertical axis represents the thresholds, and the horizontal axis represents the temperatures of the magnets of the motor (32).

FIG. 7 shows demagnetizing current information (W). The demagnetizing current information (W) indicates a minimum value of the demagnetizing current in the operating temperature range of the motor (32). The demagnetizing current information (W) is information in which a plurality of temperatures of the magnets are associated with respective minimum values of the demagnetizing currents (the minimum values of the demagnetizing currents in the operating temperature range of the motor (32)). The demagnetizing current is a current that flows through the motor (32) when demagnetization occurs. In the coordinate system in FIG. 7 indicating the demagnetizing current information (W), the vertical axis represents the minimum value of the demagnetizing current, and the horizontal axis represents the temperature of the magnets of the motor (32). The minimum value of the demagnetizing current varies depending on the temperature of the magnets of the motor (32). The higher the temperature of the magnets, the lower the minimum value of the demagnetizing current becomes.

The demagnetizing current information (W) may be stored in the storage (67) or does not have to be stored in the storage (67).

If the current has the same magnitude, the threshold information (U) sets a threshold that is lower than the minimum value of the demagnetizing current.

### <Configuration for Calculating Estimated Temperature of Magnets>

The control unit (68) (see FIG. 4) calculates the estimated temperature of the magnets of the motor (32). A configuration of the control unit (68) for calculating the estimated temperature of the magnets is not specifically limited. In this embodiment, the control unit (68) calculates the estimated temperature of the magnets based on the temperature of the discharge pipe (22), the number of revolutions of the motor (32), and the current flowing through the motor (32). For example, the control unit (68) calculates (outputs) the estimated temperature of the magnets by inputting physical quantities related to the compressor (30) as input data to an estimation model. The estimation model will be described later. In this embodiment, the physical quantities related to the compressor (30) include the number of revolutions of the motor (32), the temperature of the discharge pipe (22), and the current flowing through the motor (32).

### <Estimation Model>

The storage (67) (see FIG. 4) stores the estimation model for calculating the estimated temperature of the magnets. The estimation model is generated using a multiple regression analysis method, which is a type of regression analysis method. The estimation model is generated in the form of a regression equation (a multiple regression equation) by performing multiple regression analysis on explanatory variables and a response variable, where the explanatory variables are the number of revolutions of the motor (32), the temperature of the discharge pipe (22), and the current flowing through the motor (32), and the response variable is the estimated temperature of the magnets. Data for use in multiple regression analysis (the explanatory variables and the response variable) are derived, for example, from a test result using an actual air conditioner (10) (an actual machine) (a result of a test conducted to examine how the temperature of the magnets changes when the number of revolutions of the motor (32), the temperature of the discharge pipe (22), and the current flowing through the motor (32) are varied, using the actual machine) or from a simulation result (a result of a calculation conducted to examine how the temperature of the magnets changes in relation to the number of revolutions of the motor (32), the temperature of the discharge pipe (22), and the current flowing through the motor (32) by numerically simulating the air conditioner (10) on a computer).

The estimation model may be generated using artificial intelligence (AI), and may be a trained model that is trained using machine learning based on known data on the explanatory variables and the response variable (e.g., the above test result or data obtained from the simulation result), using the physical quantities related to the compressor (30) (the number of revolutions of the motor (32), the temperature of the discharge pipe (22), and the current flowing through the motor (32)) as the explanatory variables, and the estimated temperature of the magnets as the response variable. Examples of the method of generating the estimation model using the AI include a machine learning method (deep learning) through a multilayer artificial neural network. The estimation model is a trained model that has learned the relationship of correspondence between the estimated temperature of the magnets and each of the number of revolutions of the motor (32), the temperature of the discharge pipe (22), and the current flowing through the motor (32), using the number of revolutions of the motor (32), the temperature of the discharge pipe (22), and the current flowing through the motor (32) as the input data. The estimation model that has received the number of revolutions of the motor (32), the temperature of the discharge pipe (22), and the current flowing through the motor (32) as the input data outputs the estimated temperature of the magnets as output data.

### <Characteristics of Estimation Model>

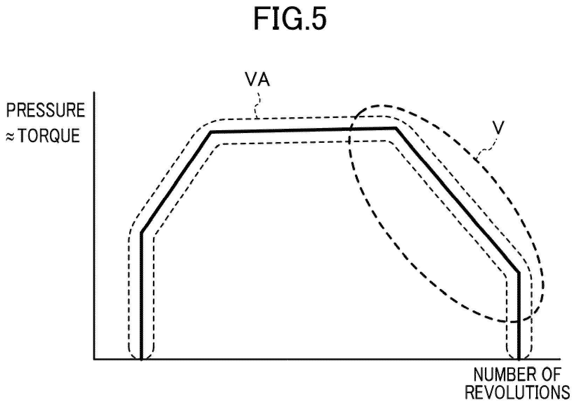

FIG. 5 shows the relationship between the number of revolutions of the motor (32) and the pressure of the compressor (30) and shows the operating range of the motor (32). In other words, the pressure of the compressor (30) indicates the torque of the motor (32).

The estimation model of this embodiment is an estimation model tailored to an operating range (V) of the entire operating range (VA) of the motor (32). The estimation model tailored to the operating range (V) indicates that the explanatory variables and the response variable for use in creating the estimation model are acquired during operation in the operating range (V). The reason why the estimation model tailored to the operating range (V) is used as the estimation model will be described below.

As shown in FIG. 5, in the operating range (V), an increase in the number of revolutions of the motor (32) and an increase in the torque (load) of the motor (32) cause a larger current to flow through the motor (32). However, an excessively large current flowing through the motor (32) may cause demagnetization. Thus, the current range of the motor (32) is limited so as not to exceed a minimum value of the demagnetizing current. The current range of the motor (32) is the upper limit of the range of current flowing through the motor (32).

In the operating range (V) of the entire operating range (VA), a larger current flows through the motor (32) than in the other operating ranges. Thus, there is an increased risk that the current flowing through the motor (32) is close to exceeding the minimum value of the demagnetizing current.

Preferably, the current range of the motor (32) is as wide as possible so that the motor (32) shows its performance effectively. Thus, it is not preferable to set the threshold of the current flowing through the motor (32) to be excessively low in the operating range (V) and narrow the current range of the motor (32) to avoid the risk described above.

Thus, in this embodiment, the estimation model tailored to the operating range (V) is used as the estimation model described above to avoid the aforementioned risk and secure the widest possible current range of the motor (32). The reason why the estimation model tailored to the operating range (V) is used as the estimation model will be described below.

Calculation of the estimated temperature of the magnets based on the estimation model enables selection of a threshold corresponding to the estimated temperature of the magnets from the demagnetizing current information (W) shown in FIG. 7, and enables setting of the current range of the motor (32) based on the selected threshold. For example, if the estimated temperature of the magnets is the estimated temperature (TA), the current range of the motor (32) can be set to be values equal to or less than the threshold (UA). Thus, if the estimated temperature of the magnets is the estimated temperature (TA), the current flowing through the motor (32) is controlled so as not to exceed the threshold (UA).This control can reduce the likelihood that the current flowing through the motor (32) will exceed the minimum value of the demagnetizing current in the operating temperature range of the motor (32) and prevent demagnetization.

Regarding the estimation model, in the following description, an estimation model created to correspond to the entire operating range (VA) of the motor (32) may be referred to as an "entire-range model."

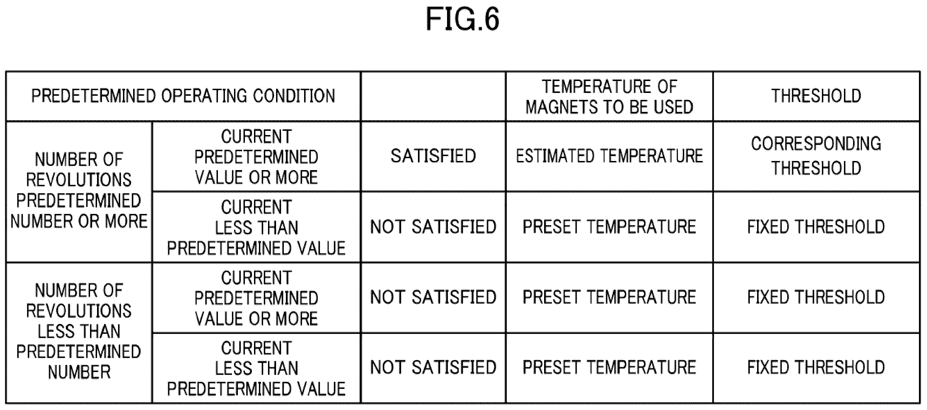

For example, as shown in FIG. 6, the rate of change in pressure in response to the number of revolutions of the motor (32) is irregular in the entire operating range (VA); therefore, if the estimated temperature (TA) of the magnets is calculated based on the entire-range model, it is difficult to accurately calculate the estimated temperature (TA) of the magnets in the entire operating range (VA), and a large error may occur in the obtained estimated temperature (TA) of the magnets in some operating ranges.

A large error in the estimated temperature (TA) leads to a large error in the threshold (UA) as well, because the threshold (UA) corresponds to the estimated temperature (TA) in the demagnetizing current information (W) and has correlation with the estimated temperature (TA). In this case, even if the current flowing through the motor (32) is controlled so as not to exceed the threshold (UA), the current flowing through the motor (32) may exceed the minimum value of the demagnetizing current, leading to demagnetization, because the threshold (UA) itself contains a large error and is not an accurate value. In particular, as described above, the operating range (V) is a range where the current flowing through the motor (32) is larger than that in the other operating ranges; therefore, there is an increased risk that the current exceeds the minimum value of the demagnetizing current. Thus, to reduce the risk, it is necessary to set the threshold (UA) to be accurate.

Since the threshold (UA) has correlation with the estimated temperature (TA) as described above, the threshold (UA) can be set to be an accurate value if the estimated temperature (TA) is accurately calculated.

As such, in this embodiment, the estimation model is not intended for the entire operating range (VA), but an estimation model tailored to the operating range (V). Thus, for the operating range (V), it is possible to accurately calculate the estimated temperature (TA) of the magnets by calculating the estimated temperature (TX) based on the estimation model tailored to the operating range (V). As a result, the threshold (UA) can be set to be an accurate value, enabling a reduction of demagnetization in the operating range (V). In addition, the accurate threshold (UA) can reduce the likelihood that the threshold (UA) is improperly low. It is thus possible to secure the widest possible current range of the motor (32).

### <Configuration for Determining Threshold>

The control unit (68) determines the threshold of the current flowing through the motor (32) based on the threshold information (U) (see FIG. 7). In this embodiment, a configuration for determining the threshold differs depending on whether the operating condition of the motor (32) satisfies a predetermined operating condition. The predetermined operating condition is the condition under which the number of revolutions of the motor (32) is equal to or greater than a predetermined number and the current flowing through the motor (32) is equal to or greater than a predetermined value. The operating condition of the motor (32) is defined by the relationship between the number of revolutions of the motor (32) and the current flowing through the motor (32).

### <Case Where Predetermined Operating Condition Is Satisfied>

As shown in FIG. 6, the case in which the operating condition of the motor (32) satisfies the predetermined operating condition is a case in which the number of revolutions of the motor (32) is equal to or greater than the predetermined number and the current flowing through the motor (32) is equal to or greater than the predetermined value. The case in which the predetermined operating condition is satisfied is a case in which the motor (32) is operated in the operating range (V).

As shown in FIG. 7, if the operating condition of the motor (32) satisfies the predetermined operating condition, the control unit (68) calculates the estimated temperature (TA) of the magnets based on the estimation model and the physical quantities related to the compressor (30), and determines a value corresponding to the calculated estimated temperature (TA) of the magnets in the threshold information (U) to be the threshold of the current flowing through the motor (32). In the first embodiment, the physical quantities related to the compressor (30) include the current flowing through the motor (32) (the detection value of the first sensor (64)), the number of revolutions of the motor (32) (the detection value of the second sensor (65)), and the temperature of the discharge pipe (22) (the detection value of the third sensor (66)).

As shown in FIG. 7, if the estimated temperature (TA) of the magnets is calculated, for example, in the case of satisfying the predetermined operating condition, the control unit (68) determines the threshold (UA) corresponding to the estimated temperature (TA) in the threshold information (U) to be the threshold of the current flowing through the motor (32). The threshold (UA) corresponding to the estimated temperature (TA) may be hereinafter referred to as a "corresponding threshold (UA)." The estimated temperature (TA) is a value that varies in accordance with the detection value of the first sensor (64), the detection value of the second sensor (65), and/or the detection value of the third sensor (66). The corresponding threshold (UA) is a value that varies in accordance with the estimated temperature (TA).

### <Reason Why Corresponding Threshold Is Used>

If the operating condition of the motor (32) satisfies the predetermined operating condition (the operating range (V) in FIG. 5), the current flowing through the motor (32) increases to a value equal to or greater than the predetermined value, resulting in an increased risk that the current may exceed the minimum value of demagnetizing current in the operating temperature range of the motor (32) to cause demagnetization. In this case, to reduce the risk, the estimated temperature (TA) of the magnets is calculated based on the estimation model tailored to the operating range (V), and the corresponding threshold (UA) corresponding to the estimated temperature (TA) in the threshold information (U) is determined to be the threshold of the current flowing through the motor (32). By using the estimation model tailored to the operating range (V), it is possible to make the corresponding threshold (UA) be an accurate value adapted to the operating range (V). Thus, the control on the current flowing through the motor (32) so as not to exceed the corresponding threshold (UA) can effectively reduce the risk described above. In addition, the accurate corresponding threshold (UA) can reduce the likelihood that the corresponding threshold (UA) is improperly low. It is thus possible to secure the widest possible current range of the motor (32). Thus, if the predetermined operating condition is satisfied (in the operating range (V) in FIG. 5), the corresponding threshold (UA) is used as the threshold of the current flowing through the motor (32) from the viewpoint of reducing the risk described above and securing the widest possible current range of the motor (32).

### <Case Where Predetermined Operating Condition Is Not Satisfied>

As shown in FIG. 6, the case in which the operating condition of the motor (32) does not satisfy the predetermined operating condition is a case (i) in which the number of revolutions of the motor (32) is equal to or greater than the predetermined number and the current flowing through the motor (32) is less than the predetermined value, or a case (ii) in which the number of revolutions of the motor (32) is less than the predetermined number and the current flowing through the motor (32) is equal to or greater than the predetermined value, or a case (iii) in which the number of revolutions of the motor (32) is less than the predetermined number and the current flowing through the motor (32) is less than the predetermined value. The case in which the predetermined operating condition is not satisfied is a case in which the motor (32) is operated outside the operating range (V).

As shown in FIG. 6, if the operating condition of the motor (32) does not satisfy the predetermined operating condition, the control unit (68) determines the threshold (UB) corresponding to a preset temperature (TB) in the threshold information (U) to be the threshold of the current flowing through the motor (32). The threshold (UB) corresponding to the preset temperature (TB) may be hereinafter referred to as a "fixed threshold (UB)." The preset temperature (TB) and the fixed threshold (UB) are constant values. In this embodiment, the preset temperature (TB) is, for example, the maximum temperature of the temperature limit values of the motor (32). The preset temperature (TB) may be a value equal to or higher than the maximum temperature in the operating temperature range of the motor (32). The preset temperature (TB) may be a value equal to or higher than the maximum temperature in the operating temperature range of the motor (32) and equal to or lower than the maximum temperature of the temperature limit values of the motor (32) The temperature limit values of the motor (32) indicate the temperature limit values at which the motor (32) can be used (limit values of the temperature of the motor (32)). The operating temperature range of the motor (32) indicates the range of possible values of the temperature that the motor (32) can reach when the motor (32) is used under intended operating conditions (allowable values of the temperature of the motor (32)). Of the temperature limit values of the motor (32), the maximum temperature is referred to as α1, and the minimum temperature as α2; and in the operating temperature range of the motor (32), the maximum temperature is referred to as β1, and the minimum temperature as β2. Then, α1 is greater than β1, and α2 is less than β2 (α2 < β2 < β1 < α1).

### <Predetermined Value>

The predetermined value is a value at which the risk of demagnetization increases due to an increase in the current flowing through the motor (32), and is appropriately determined in consideration of the characteristics, specifications, use mode, and other aspects of the motor (32). The predetermined value may be, for example, the minimum value within the range of possible values of the demagnetizing current at the temperature limit values of the motor (32). The predetermined value may be, for example, the minimum value within the range of possible values of the demagnetizing current in the operating temperature range of the motor (32).

### <Reason Why Fixed Threshold Is Used>

If the operating condition of the motor (32) satisfies the predetermined operating condition (the range other than the operating range (V) in FIG. 5), the value of the current flowing through the motor (32) is small, not exceeding the fixed threshold (UB) in a normal operation of the motor (32). In addition, for ranges other than the operating range (V), creating an estimation model tailored to those ranges, despite the fixed threshold (UB) being sufficient, and determining the threshold in the same manner as for the operating range (V) would be unnecessarily complex. Thus, if the predetermined operating condition is not satisfied (the range other than the operating range (V) in FIG. 5), the fixed threshold (UB) that is a constant value is used as the threshold of the current flowing through the motor (32).

### <First Example Operation of Control Unit>

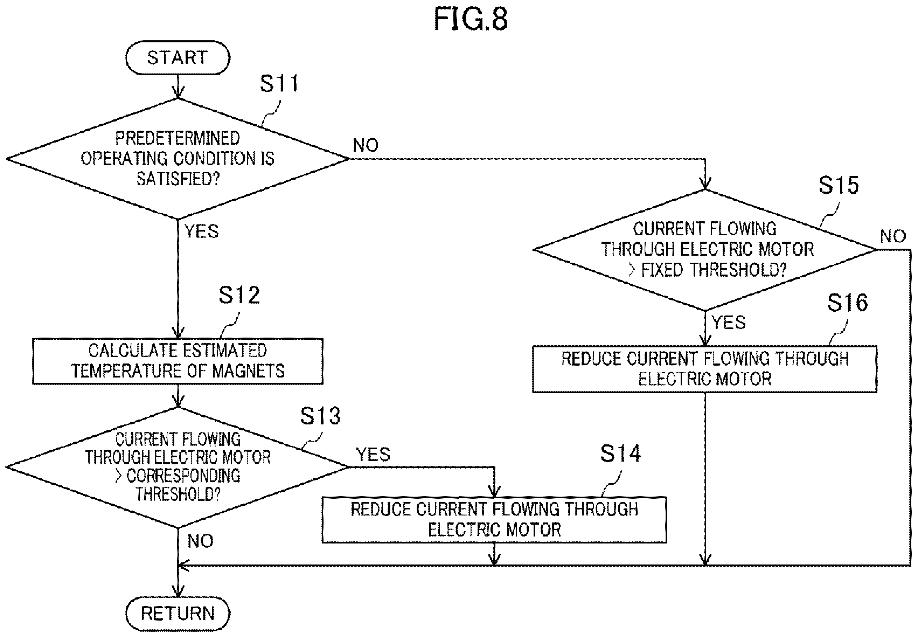

As shown in FIG. 8, in step S11, the control unit (68) determines whether the operating condition of the motor (32) satisfies the predetermined operating condition. If it is determined that the operating condition satisfies the predetermined operating condition ("Yes" in step S11), the process proceeds to step S12. If it is determined that the operating condition does not satisfy the predetermined operating condition ("No" in step S11), the process proceeds to step S15.

In step 12, the control unit (68) calculates the estimated temperature (TA) of the magnets of the motor (32) based on the estimation model and the physical quantities related to the compressor (30).

In step 13, the control unit (68) determines whether the current flowing through the motor (32) exceeds the corresponding threshold (UA). The corresponding threshold (UA) is a threshold corresponding to the estimated temperature (TA) in the threshold information (U). If it is determined that the current exceeds the corresponding threshold (UA) ("Yes" in step S13), the process proceeds to step S14. If it is determined that the current does not exceed the corresponding threshold (UA) ("No" in step S13), the process proceeds to step S11.

In step 14, the control unit (68) reduces the current flowing through the motor (32). Specifically, in step 14, the control unit (68) reduces the current flowing through the motor (32), while maintaining the motor (32) in an energized state, so that the current is less than the corresponding threshold (UA). As a result, the rotational speed of the motor (32) decreases, but the rotating state of the motor (32) is maintained. After the end of step 14, the process proceeds to step S11.

In step 15, the control unit (68) determines whether the current flowing through the motor (32) exceeds the fixed threshold (UB). The fixed threshold (UB) is a threshold corresponding to the preset temperature (TB) in the threshold information (U). If it is determined that the current exceeds the fixed threshold (UB) ("Yes" in step S15), the process proceeds to step S16. If it is determined that the current does not exceed the corresponding threshold (UA) ("No" in step S15), the process proceeds to step S11.

In step 16, the control unit (68) reduces the current flowing through the motor (32). Specifically, in step 16, the control unit (68) reduces the current flowing through the motor (32), while maintaining the motor (32) in the energized state, so that the current is less than the fixed threshold (UB). As a result, the rotational speed or the torque of the motor (32) decreases, but the rotating state of the motor (32) is maintained. After the end of step 16, the process proceeds to step S11.

### <Variation of First Example Operation of Control Unit>

In step 14 and/or step 16, the control unit (68) may stop the switching operation of the inverter circuit to stop energizing the motor (32). As a result, the rotation of the motor (32) stops, and the process ends.

### <Advantages>

As described above, if the operating condition of the motor (32) satisfies the predetermined operating condition, and the current flowing through the motor (32) exceeds the corresponding threshold (UA), which is the threshold corresponding to the estimated temperature (TA) of the magnets in the threshold information (U), the control unit (68) reduces the current flowing through the motor (32). If the operating condition of the motor (32) does not satisfy the predetermined operating condition, and the current flowing through the motor (32) exceeds the fixed threshold (UB), which is the threshold corresponding to the preset temperature (TB) of the magnets in the threshold information (U), the control unit (68) reduces the current flowing through the motor (32). Thus, a threshold to be used to limit the current flowing through the motor (32) in response to the operating condition of the motor (32) can be switched between the corresponding threshold (UA) and the fixed threshold (UB). As a result, the corresponding threshold (UA) is used in an operating condition where a large error in the estimated temperature (TA) of the magnets does not occur, and the fixed threshold (UB) is used in an operating condition where a large error in the estimated temperature (TA) of the magnets occurs. This configuration can effectively reduce the likelihood of demagnetization of the motor (32).

### <Second Embodiment>

Differences from the first embodiment will be mainly described below.

### <Second Example of Threshold Information>

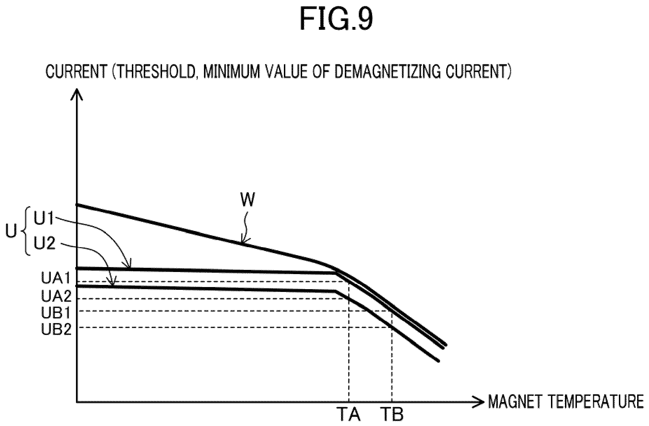

As shown in FIG. 9, threshold information (U) includes first threshold information (U1) and second threshold information (U2). The first threshold information (U1) indicates a threshold for use to determine whether energization of the motor (32) should be stopped. The second threshold information (U2) indicates a threshold for use to determine whether the current flowing through the motor (32) should be reduced.

If the current has the same magnitude, the first threshold information (U1) sets a threshold that is lower than the minimum value of the demagnetizing current. If the current has the same magnitude, the second threshold information (U2) sets a threshold that is lower than that set based on the first threshold information (U1).

### <Second Example Operation of Control Unit>

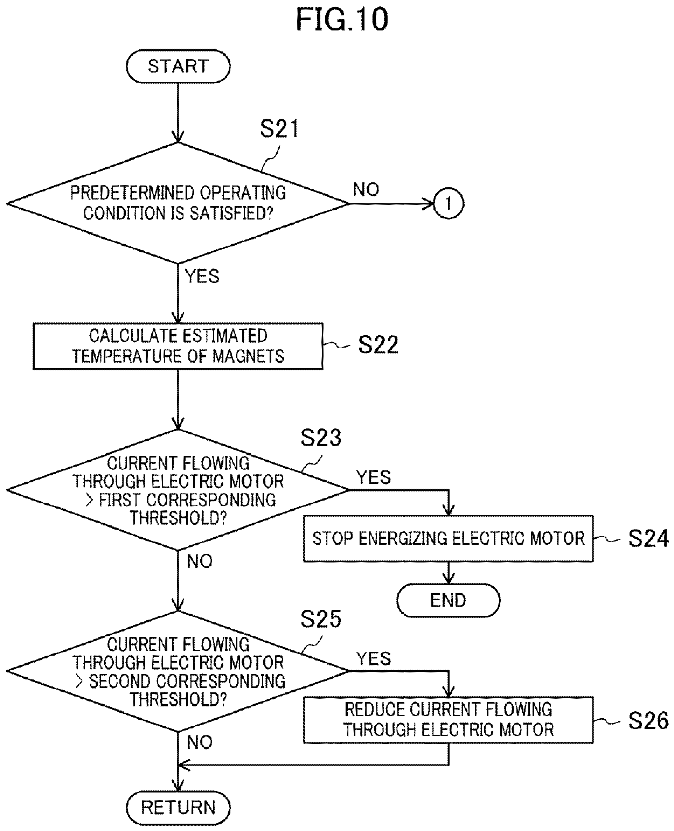

As shown in FIG. 10, in step S21, the control unit (68) determines whether the operating condition of the motor (32) satisfies the predetermined operating condition. If it is determined that the operating condition satisfies the predetermined operating condition ("Yes" in step S21), the process proceeds to step S22. If it is determined that the operating condition does not satisfy the predetermined operating condition ("No" in step S21), the process proceeds to step S27.

In step 22, the control unit (68) calculates the estimated temperature (TA) of the magnets of the motor (32) based on the estimation model and the physical quantities related to the compressor (30).

In step 23, the control unit (68) determines whether the current flowing through the motor (32) exceeds the first corresponding threshold (UA1). The first corresponding threshold (UA1) is a threshold corresponding to the estimated temperature (TA) in the first threshold information (U1). The first corresponding threshold (UA1) is a value that varies in accordance with the estimated temperature (TA). If it is determined that the current exceeds the first corresponding threshold (UA1) ("Yes" in step S23), the process proceeds to step S24. If it is determined that the current does not exceed the first corresponding threshold (UA1) ("No" in step S23), the process proceeds to step S25.

In step 24, the control unit (68) stops energization of the motor (32). As a result, the rotation of the motor (32) stops, and the process ends.

In step 25, the control unit (68) determines whether the current flowing through the motor (32) exceeds the second corresponding threshold (UA2). The second corresponding threshold (UA2) is a threshold corresponding to the estimated temperature (TA) in the second threshold information (U2). The second corresponding threshold (UA2) is a value that varies in accordance with the estimated temperature (TA). If it is determined that the current exceeds the second corresponding threshold (UA2) ("Yes" in step S25), the process proceeds to step S26. If it is determined that the current does not exceed the second corresponding threshold (UA2) ("No" in step S25), the process proceeds to step S21.

In step 26, the control unit (68) reduces the current flowing through the motor (32). Specifically, in step 26, the control unit (68) reduces the current flowing through the motor (32), while maintaining the motor (32) in the energized state, so that the current is less than the second corresponding threshold (UA2). After the end of step 26, the process proceeds to step S21.

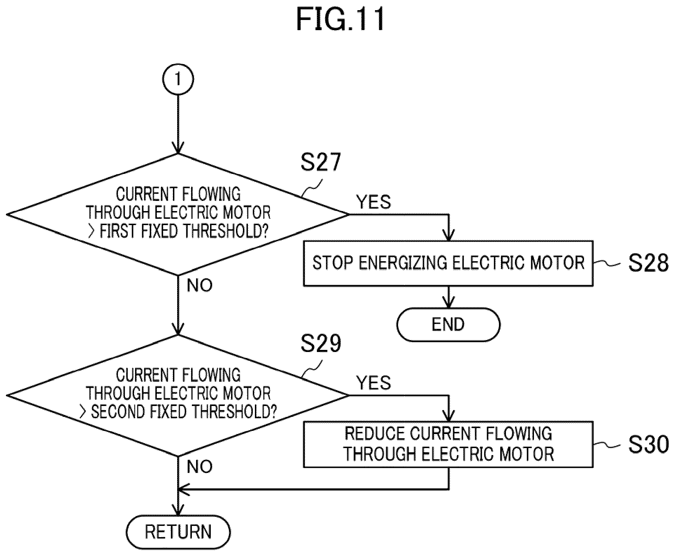

As shown in FIG. 11, in step 27, the control unit (68) determines whether the current flowing through the motor (32) exceeds the first fixed threshold (UB1). The first fixed threshold (UB1) is a threshold corresponding to the preset temperature (TB) in the first threshold information (U1). The first fixed threshold (UB1) is a constant value. If it is determined that the current exceeds the first fixed threshold (UB1) ("Yes" in step S27), the process proceeds to step S28. If it is determined that the current does not exceed the first fixed threshold (UB1) ("No" in step S27), the process proceeds to step S29.

In step 28, the control unit (68) stops energization of the motor (32). As a result, the rotation of the motor (32) stops, and the process ends.

In step 29, the control unit (68) determines whether the current flowing through the motor (32) exceeds the second fixed threshold (UB2). The second fixed threshold (UB2) is a threshold corresponding to the preset temperature (TB) in the second threshold information (U2). The second fixed threshold (UB2) is a constant value. If it is determined that the current exceeds the second fixed threshold (UB2) ("Yes" in step S29), the process proceeds to step S30. If it is determined that the current does not exceed the second fixed threshold (UB2) ("No" in step S29), the process proceeds to step S21.

In step 30, the control unit (68) reduces the current flowing through the motor (32). Specifically, in step 30, the control unit (68) reduces the current flowing through the motor (32), while maintaining the motor (32) in the energized state, so that the current is less than the second fixed threshold (UB2). After the end of step 26, the process proceeds to step S21.

### <Advantages>

As described above, if the current flowing through the motor (32) exceeds the threshold (UA1, UB1) set based on the first threshold information (U1), the control unit (68) stops energization of the motor (32). If the current flowing through the motor (32) exceeds the threshold (UA2, UB2) set based on the second threshold information (U2), the control unit (68) reduces the current that passes through the motor (32) while maintaining the motor (32) in the energized state. Accordingly, by using a configuration that reduces the current, while maintaining the passage of the current through the motor (32), to lower the rotational speed of the motor (32) and a configuration that stops the current flowing through the motor (32) to stop the motor (32), it is possible to reduce, in a stepwise manner, the likelihood that the current of the motor (32) exceeds the demagnetizing current.

While the embodiments and the variations thereof have been described above, it will be understood that various changes in form and details may be made without departing from the spirit and scope of the claims (e.g., (1) to (6) below). The embodiments and the variations thereof may be appropriately combined and replaced with each other without deteriorating intended functions of the present disclosure.

(1) In each of the first embodiment and the second embodiment, the control unit (68) calculates the estimated temperature (TA) of the magnets of the motor (32) based on the estimation model and the physical quantities related to the compressor (30). The physical quantities related to the compressor (30) include the number of revolutions of the motor (32), the temperature of the discharge pipe (22), and the current flowing through the motor (32). However, the present invention is not limited thereto. The physical quantities related to the compressor (30) merely need to include at least the number of revolutions of the motor (32) and the temperature of the discharge pipe (22). The explanatory variables for creating the estimation model merely need to include at least the number of revolutions of the motor (32) and the temperature of the discharge pipe (22).

The physical quantities related to the compressor (30) and the explanatory variables may each include the number of revolutions of the motor (32), the temperature of the discharge pipe (22), and a predetermined physical quantity. The predetermined physical quantity is at least one of the current flowing through the motor (32), the suction pressure of the compressor (30), the discharge pressure of the compressor (30), the physical quantities correlated with at least one of the suction pressure or discharge pressure of the compressor (30), the temperature around the compressor (30), the amount of the refrigerating machine oil flowing through the internal space (S) of the housing (31), the physical quantities correlated with the amount of the refrigerating machine oil, the total time during which the compressor (30) is driven, the temperature of the suction pipe (23), the physical quantities correlated with the temperature of the suction pipe (23), the amount of heat generated by the coils (33a) of the motor (32), or the physical quantities correlated with the amount of heat generated by the coils (33a).

The suction pressure of the compressor (30) indicates the pressure of the refrigerant sucked from the suction pipe (23). The discharge pressure of the compressor (30) indicates the pressure of the refrigerant discharged from the discharge pipe (22). The temperature around the compressor (30) indicates the temperature of the housing (31). The temperature around the compressor (30) is an example of the temperature of the outer contour of the compressor (30).

(2) In the first embodiment and the second embodiment, the magnets of the motor (32) include a rare earth magnet. However, the present invention is not limited thereto. The magnets of the motor (32) may include a ferrite magnet. In this case, the preset temperature (TB) is the minimum temperature of the temperature limit values of the motor (32). If the magnets are rare earth magnets, the preset temperature (TB) is set to be the maximum temperature of the temperature limit values of the motor (32), and if the magnets are ferrite magnets, the preset temperature (TB) is set to be the minimum temperature of the temperature limit values of the motor (32), because the rare earth magnets are demagnetized more easily at higher temperatures, whereas the ferrite magnets are demagnetized more easily at lower temperatures. If the magnets of the motor (32) include a ferrite magnet, the preset temperature (TB) may be a value equal to or lower than the minimum temperature in the operating temperature range of the motor (32). If the magnets of the motor (32) include a ferrite magnet, the preset temperature (TB) may be a value equal to or higher than the minimum temperature of the temperature limit values of the motor (32) and equal to or lower than the minimum temperature in the operating temperature range of the motor (32).

(3) In the first embodiment and the second embodiment, the predetermined operating condition (see step S11 in FIG. 8 and step S21 in FIG. 10) includes the condition under which the current flowing through the motor (32) is equal to or greater than the predetermined value. The current (the current flowing through the motor (32)) to be compared to the predetermined value may be a current value filtered for antihunting. Antihunting through filtering of the current can stabilize operation of the control unit (68) configured to determine whether the current is equal to or greater than the predetermined value.

The filtering may be performed using a low-pass filter with a cut-off frequency set to allow current variations within expected ranges to pass and remove current variations outside the expected ranges. Filtering may cause a time delay in detecting the current, and an excessively long delay may worsen the accuracy of a protection operation for reducing the current flowing through the motor (32). Thus, by setting a filter so as not to cause a delay in current variations within expected range, the intended protection operation can be achieved.

(4) In step S13 and step S15 shown in FIG. 8, step S23 and step S25 shown in FIG. 10, and step S27 and step S29 shown in FIG. 11, the control unit (68) compares various thresholds (each of the corresponding threshold (UA), the fixed threshold (UB), the first corresponding threshold (UA1), the second corresponding threshold (UA2), the first fixed threshold (UB1), and the second fixed threshold (UB2)) to the current flowing through the motor (32) and detected by the first sensor (61). In this case, the control unit (68) may perform a removal process for removing a noise signal from the information indicating the current, and may compare the information indicating the current after the removal process to the various thresholds. The noise signal is removed, for example, by limiting the amount of variation of the detection signal between samplings.

(5) In step S14 and step S16 shown in FIG. 8, step S26 shown in FIG. 10, and step S30 shown in FIG. 11, the control unit (68) reduces the current flowing through the motor (32). In this case, a filter may be used to delay changes in the calculation result of the estimated temperature (TA) of the magnets of the motor (32), as compared to a response in which the number of revolutions of the motor (32) is reduced by reducing the current.

(6) In the first embodiment and the second embodiment, the predetermined operating condition is the condition under which the number of revolutions of the motor (32) is equal to or greater than a predetermined number and the current flowing through the motor (32) is equal to or greater than a predetermined value. However, the present invention is not limited thereto.

The predetermined operating condition may be the condition under which the number of revolutions of the motor (32) is equal to or greater than the predetermined number. In this case, the estimation model for use to calculate the estimated temperature (TA) of the magnets is an estimation model tailored to an operating range (a first operating range), of the entire operating range (VA) of the motor (32), in which the number of revolutions of the motor (32) is equal to or greater than the predetermined number; and the explanatory variables and the response variable for use in creating this estimation model are acquired during operation in the first operating range.

The predetermined operating condition may be the condition under which the current flowing through the motor (32) is equal to or greater than the predetermined value. In this case, the estimation model for use to calculate the estimated temperature (TA) of the magnets is an estimation model tailored to an operating range (a second operating range), of the entire operating range (VA) of the motor (32), in which the current flowing through the motor (32) is equal to or greater than the predetermined value; and the explanatory variables and the response variable for use in creating this estimation model are acquired during operation in the second operating range.

### INDUSTRIAL APPLICABILITY

As can be seen from the foregoing description, the present disclosure is useful for a motor drive device and a compressor.

### DESCRIPTION OF REFERENCE CHARACTERS

- 32: Motor
- 64: First Sensor (Sensor)
- 68: Control Unit
- TA: Estimated Temperature
- U: Threshold Information
- UA: Corresponding Threshold

## Claims

1. A motor drive device configured to drive a motor (32) including a magnet that generates a magnetic field, the device comprising:
a sensor (64) configured to detect a current flowing through the motor (32); and
a control unit (68) configured to calculate an estimated temperature (TA) of the magnet,
the control unit (68)
reducing the current flowing through the motor (32) if an operating condition of the motor (32) satisfies a predetermined operating condition, and the current flowing through the motor (32) exceeds a corresponding threshold (UA), the corresponding threshold (UA) being a threshold corresponding to the estimated temperature (TA) of the magnet in threshold information (U) in which a plurality of temperatures of the magnet and a plurality of thresholds are associated with each other, and
reducing the current flowing through the motor (32) if the operating condition of the motor (32) does not satisfy the predetermined operating condition, and the current flowing through the motor (32) exceeds a fixed threshold (UB), the fixed threshold (UB) being a threshold corresponding to a preset temperature (TB) of the magnet in the threshold information (U).

2. The motor drive device of claim 1, wherein
the magnet includes a rare earth magnet, and
the preset temperature (TB) is a value equal to or higher than a maximum temperature of temperature limit values of the motor (32) or a maximum temperature in an operating temperature range of the motor (32).

3. The motor drive device of claim 1, wherein
the magnet includes a ferrite magnet, and
the preset temperature (TB) is a value equal to or lower than a minimum temperature of temperature limit values of the motor (32) or a minimum temperature in an operating temperature range of the motor (32).

4. The motor drive device of any one of claims 1 to 3, wherein
the predetermined operating condition includes a condition under which the number of revolutions of the motor (32) is equal to or greater than a predetermined number of revolutions.

5. The motor drive device of any one of claims 1 to 3, wherein
the predetermined operating condition includes a condition under which the current flowing through the motor (32) is equal to or greater than a predetermined value.

6. The motor drive device of any one of claims 1 to 3, wherein
the predetermined operating condition includes a condition under which the number of revolutions of the motor (32) is equal to or greater than a predetermined number of revolutions, and the current flowing through the motor (32) is equal to or greater than a predetermined value.

7. The motor drive device of claim 5 or 6, wherein
the predetermined value is a minimum value within a range of possible values of a demagnetizing current at temperature limit values of the motor, and
the demagnetizing current is a current value of the motor that reduces a magnetic force of the magnet.

8. The motor drive device of claim 5 or 6, wherein
the current to be compared to the predetermined value is a current value filtered for antihunting.

9. The motor drive device of claim 8, wherein
the filtering is performed using a low-pass filter with a cut-off frequency set to allow current variations within an expected range to pass and remove current variations outside the expected range.

10. The motor drive device of any one of claims 1 to 9, wherein
the motor (32) drives a compressor (30), and
the control unit (68) calculates the estimated temperature (TA) of the magnet based on a temperature of a discharge pipe (22) of the compressor (30) or a temperature of an outer contour of the compressor (30).

11. The motor drive device of any one of claims 1 to 10, wherein
the control unit (68) stops energization of the motor (32) to reduce the current flowing through the motor (32).

12. The motor drive device of any one of claims 1 to 11, wherein
the control unit (68) removes a noise signal from information indicating the current of the motor (32) to be compared to the corresponding threshold (UA) or the fixed threshold (UB).

13. The motor drive device of claim 12, wherein
the noise signal is removed by limiting an amount of variation in a detection signal between samplings.

14. The motor drive device of any one of claims 1 to 13, wherein
the control unit (68) reduces a current that passes through the motor (32), while maintaining the motor (32) in an energized state, to reduce the current flowing through the motor (32).

15. The motor drive device of claim 14, wherein
a filter is used to delay changes in a calculation result of the estimated temperature (TA) of the magnet, as compared to a response in which the number of revolutions of the motor (32) is reduced by reducing the current.

16. The motor drive device of any one of claims 1 to 15, wherein
the threshold information (U) includes first threshold information (U1) and second threshold information (U2), the second threshold information (U2) being used to set a threshold lower than that set based on the first threshold information (U1),
the threshold includes the corresponding threshold (UA1, UA2) and the fixed threshold (UB1, UB2),
the control unit (68)
stops energization of the motor (32) if the current flowing through the motor (32) exceeds the threshold (UA1, UB1) set based on the first threshold information (U1), and
reduces a current that passes through the motor (32), while maintaining the motor (32) in an energized state, if the current flowing through the motor (32) exceeds the threshold (UA2, UB2) set based on the second threshold information (U2).

17. A compressor comprising:
the motor drive device of any one of claims 1 to 16; and the motor (32).
